# NEUE EUROPÄISCHE PATENTSCHRIFT

(11) **EP 1 362 890 B2**
(45) Veröffentlichungstag und Bekanntmachung des Hinweises auf die Entscheidung über den Einspruch: **28.09.2016**
(45) Hinweis auf die Patenterteilung: 30.08.2006
(21) Anmeldenummer: 02010352.9
(22) Anmeldetag: 07.05.2002
(51) Int. Cl.: C08L 23/02, B32B 1/08, B32B 27/34, B32B 27/32, F16L 11/15, F16L 11/11

(54) **Gewellter Mehrschicht-Polymer-Schlauch- oder Rohrleitung mit reduzierter Längenänderung**
Corrugated polymeric tubing or conduit having reduced change in length
Tube polymère ondulé ou conduit à variation de longueur réduite

(43) Veröffentlichungstag der Anmeldung: 19.11.2003
(73) Patentinhaber: EMS-CHEMIE AG, 7013 Domat-Ems (CH)
(72) Erfinder: Thullen, Helmut Dipl.-Chem., 7402 Bonaduz (CH); Stoeppelmann, Georg Dr. rer. nat., 7402 Bonaduz (CH); Kettl, Ralph, Dipl.-Ing., 7402 Bonaduz (CH); Hoffmann, Michael Dipl.-Techn., 7402 Bonaduz (CH)
(74) Vertreter: Bremi, Tobias Hans

(56) Entgegenhaltungen:
- EP-A- 0 656 388
- EP-A- 0 671 582
- EP-A1- 0 569 681
- EP-A1- 0 601 295
- EP-A1- 0 679 826
- EP-A2- 1 039 199
- WO-A1-02/33303
- DE-A1- 10 116 427
- DE-C- 4 428 236
- DE-C- 4 432 584
- FR-A- 2 802 274
- US-A- 3 651 014
- US-A- 4 957 968
- US-A- 5 637 407
- US-A- 5 985 392
- US-A- 6 005 052
- US-B1- 6 207 758
- US-B1- 6 217 961
- S. ABDOU-SABET ET AL.: 'Thermoplastic Elastomers Ullmann's Encyclpedia of Industrial Chemistry', Bd. 6, 1998, WILEY-VCH, WEINHEIM Seiten 1 - 56
- D. THERADINGHAM ET A.: 'Rubber 3. Synthetic 7 Thermoplastic Elastomers Ullmann's Encyclopedia of Industrial Chemistry', Bd. 6, 1998, WILEY-VCH, WEINHEIM Seiten 1 - 2
- "Thermoplastische Elastomere" in: "CD Römpp Chemie Lexikon - Version 1.0", 1995,Georg Thieme Verlag

## Beschreibung

Die vorliegende Erfindung betrifft zweischichtige Polymer-Schlauch-oder Rohrleitungen für den Einsatz als druckbeaufschlagte Fluidleitungen in Kraftfahrzeugen. Die erfindungsgemässen Fluidleitungen können glatt ausgebildet sein; alternativ weisen sie durchgehend oder zumindest teilweise gewellte Wandungen auf, wobei erfindungsgemäss besonders bevorzugt spiralförmig gewellte Wandungen sind. Die erfindungsgemässe Rohrleitung weist eine äussere Schicht aus einer Formmasse aus einem härteren Polymer oder einer Polymer-Mischung und eine innere Schicht aus einem kautschukelastischen Polymer oder einer Polymer-Mischung auf. Erfindungsgemäss wird somit ein Material für die Schichten ausgewählt, welches im fertigen Verbund eine sogenannte "Hart-Weich-Kombination" ergibt. Die kautschukelastische Polymer Zusammensetzung oder Polymer-Mischung weist eine Härte im Bereich von etwa 30 Shore A bis 60 Shore D, insbesondere von etwa 30 Shore A bis 90 Shore A, die erfindungsgemässe Schlauch- oder Rohrleitung werden so ausgewählt, dass sie sich durch Coextrusion bzw. durch die sogenannten Conex-Verfahren verarbeiten lassen und dadurch kraft- oder formschlüssig, d.h. ohne zusätzliche Haftvermittler, direkt aufeinander haften, ohne zu delaminieren.

Besonders bevorzugte Anwendungen der erfindungsgemässen Rohre liegen im Automobilbereich zur Realisierung von Flüssigkeitsleitungen, Luftführungsieilen oder auch von Kraftstoffleitungen.

Üblicherweise werden heutzutage Luftführungteile und Flüssigkeitsleitungen, wie zum Beispiel Kühlflüssigkeitsleitungen, immer noch aus textilarmierten Gummirohren und Gummischläuchen gefertigt. Rohre und Schläuche aus thermoplastischen Kunststoffen bieten demgegenüber eine erhebliche Kosten- und Gewichtseinsparung und besitzen darüber hinaus ein verbessertes Recycling-Potential. Bei dieser Materialsubstihition wird von den thermoplastischen Rohren eine vergleichbare Biegeflexibilität wie bei Gummirohren verlangt.

Die höhere Materialsteifigkeit der relevanten Thermoplaste kann insbesondere durch eine gewellte Struktur der Rohrmantelfläche kompensiert werden. Diese als Wellrohr bekannte Geometrie ist in verschiedenen Ausführungsformen bekannt. Die damit erreichte Biegeflexibilität verschlechtert aber die Zugsteifigkeit, d.h. bei einer Zugbelastung muss eine grössere Längendehnung des Rohres hingenommen werden.

Aus DE 44 32 584 C1 (Ems-Inventa AG) ist ein Wellrohr bekannt, bei dem sich die Wellungen über alle radialen Winkelbereiche in Längsrichtung erstrecken. Weitere bekannte Wellrohre sind in EP 0 671 582 A1, DE 43 21 575 C1 sowie in GB 12 09 569 beschrieben. Diese bekannten Ausführungsformen weisen Aussenkonturen auf, die für eine Wellenlinie in allen radialen Winkelbereichen auf der Rohrmantelfläche sorgen.

Aus der GB 12 20 975 ist ein Wellrohr bekannt, das Wellungen aufweist, die in einander gegenüberliegenden Bereichen wellungsfrei ausgebildet sind.

EP 863 351 B1 (Ems-Inventa AG) beschreibt demgegenüber ein druckbeaufschlagbares, einlumiges Wellrohr mit hoher Biegeflexibilität und hoher Berstdruckfestigkeit, welches keine zusätzlichen Verstärkungsmittel erfordert und bei Druckbeaufschlagung eine geringe Längendehnung aufweist. Die Aussenkonturen des in EP 863 351 B1 beschriebenen Wellrohres sind so ausgebildet, dass in zwei einander ungefähr gegenüberliegenden Bereichen auf der Rohrmantelfläche auf eine Wellung des Rohres vollkommen verzichtet wird. Die Bereiche ohne Wellung sind in Längsrichtung fortlaufend und können im Prinzip die Form einer beliebigen Kurve haben. Bevorzugt sind sie ununterbrochen gerade, schraubenförmig oder abschnittsweise gerade in wechselnden Winkelpositionen angeordnet.

Allerdings ist die in EP 863 351 B1 beschriebene Geometrie sehr aufwendig und daher werden heutzutage sehr viele Wellrohre mit einem konventionellen, symmetrischen, kreisrunden Wellrohrprofil hergestellt.

Die Herstellung der zuvor beschriebenen Polymer-Schlauch- oder Rohrleitungen erfolgen durch Coextrusion eines Polymer-Rohres oder durch das sogenannte Conex-Verfahren und anschliessender Ausbildung der Wellungen durch Blas- oder Saugformen. Alternativ sind diese Leitungen durch Coextrusions-Blasformen herstellbar. Die Herstellung geschieht in Prinzip als ein kontinuierliches Hohlkörperblasen. Der zylindrische Teil des Rohrwerkzeuges ragt bis in den geschlossenen Bereich einer umlaufenden Formkette. Durch den inneren Überdruck oder durch ein Vakuum wird der plastische Schlauch gegen die profilierten umlaufenden Formbacken gepresst, so dass das gewünschte Wellrohrprofil erzielt wird. Bei dem weiteren Durchlauf bis zum Öffnen des Formschlusses muss der plastische Schlauch so weit abgekühlt sein, dass er formstabil die umlaufenden Formbacken verlässt. Eine Vorrichtung zur Herstellung von Kunststoffrohren, deren gewellte Abschnitte spiralförmig sind, ist zum Beispiel in EP 368 096 A1 (Lupke) beschrieben.

EP 754 898 B1 (Ems-Inventa AG) beschreibt eine (glatte) dreischichtige, flexible Kühlflüssigkeitsleitung mit hoher Hydrolyse- und Berstdruckfestigkeit, die aus einer äusseren Schicht aus Polyamid 12, im folgenden auch als PA12 bezeichnet, einer Innenschicht aus vernetztem HDPE und einer Zwischenschicht aus maleinsäureanhydridgepfropftem HDPE besteht. Die angesprochene Zwischenschicht dient ausschliesslich dem Zweck der Haftvermittlung, so dass keine Delaminierung der Schichten eintritt.

US 5,191,916-A beschreibt Rohre mit Spiralgeometrie, deren Wendeln mit Metalleinlagen verstärkt sind. Diese Verstärkung ist für frei verlegte unterirdische Leitungen notwendig, um diese gegen eine hohen äusseren und inneren Druck auszustatten.

WO97/39270 (Valeo) beschreibt eine mehrschichtige Kunststoffleitung für Fluide mit einer Polyamid-Aussenschicht, einer inneren Schicht aus Polyethylen und einer dazwischen liegenden Haftvermittlerschicht, um ein Delaminieren des Mehrschichtverbundes zu verhindern. Die in WO 97/39270 beschriebene Leitung weist eine durchgehend gewellte Wandung und zwar eine spiralförmig-gewellte Wandung auf. Die Wendeln an der Aussenseite sind dabei breiter als die innen liegenden. Weiterhin sind die Wendeln an der Aussenseite abgeflacht.

EP 486 962 A1 beschreibt ein Wellrohr mit Spiralgeometrie, das an den Enden an der Aussenseite mit Gewinden versehen ist und an der Innenseite zu den Enden hin konisch erweitert ist. Gegenstand der EP 486 962 ist daher eine flexible Hülse zum Einsatz im Kabelschutzbereich, um das Durchschieben von Kabeln besser gewährleisten zu können.

EP 574 449 A1 beschreibt ein Wellrohr mit Wellung in Längs- und Querrichtung zur Rohrachse, wobei die letzteren auch spiralförmig sein können. Besonderes Merkmal der EP 574 449 A1 ist, dass die Dicke der gewellten Wandung an der Innenseite, d.h. am inneren Bogen reduziert ist. Dadurch wird ein engerer Biegeradius bei schonender Materialbeanspruchung erreicht, wobei Steifigkeit und Druckfestigkeit erhalten bleiben. Diese Konstruktion löst allerdings nicht das Problem, die Längenausdehnung im heissen Zustand zu reduzieren.

EP 671 582 B1 (Ems-Inventa AG) beschreibt Kühlflüssigkeitsleitungen aus mehreren Polymerschichten mit an den Berührungsflächen der Schichten miteinander verträglichen Polymeren, wobei einzelne benachbarte Wellungen eines gewellten Teilstücks durch mindestens einen Steg an der Innenkontur der Wellungen miteinander verbunden sind und die Stege durch eine sickenartige Verformung der Rohrwand gebildet werden und wobei aufeinanderfolgende Stege in Längsrichtung der Leitung fortlaufend um einen definierten Winkel versetzt sind und die Stege parallel zur Längsachse der Leitung ausgerichtet sind. Diese Konstruktion löst ebenfalls nicht das Problem, die Längenausdehnung im heissen Zustand zu reduzieren.

DE 43 21 575 C1 (Rasmussen) beschreibt ein Wellrohr aus thermoplastischem Kunststoff oder einem thermoplastischen Elastomer, bei dem die Wellungen derart exzentrisch ausgebildet sind, dass die Innenseite des Wandteils frei von Wellungen ist und es an jeder Stelle einen kreiszylindrischen Querschnitt aufweist. Auf diese Weise soll verhindert werden, dass sich Flüssigkeiten im Wellrohr in unteren Abschnitten der Wellentäler ansammeln. Diese Konstruktion ist in der Herstellung sehr teuer und löst ebenfalls nicht das Problem, die Längenausdehnung in heissem Zustand zu reduzieren.

DE 44 28 236 C1 (Rasmussen) beschreibt ein dreischichtiges Wellrohr, das als Kühlwasserschlauch in Kraftfahrzeugen verwendet werden soll. Die innere Schicht der Mehrschicht-Rohrleitung gemäss DE 44 28 236 C1 besteht aus einer Kunststoffschicht, die ein modifiziertes thermoplastisches Elastomer mit voll vernetzter Kautschukphase enthält. Daran schliesst sich eine Schicht aus Polyamid und eine weitere Schicht aus einem thermoplastischen Elastomer an, die ein Copolymer eines funktionalisierten Polyolefins als Hauptbestandteil und ein Polyamid als Verträglichkeitsvermittler enthält. Hinsichtlich der Auswahl des Polyamidmaterials werden jedoch keinerlei Angaben gemacht und der Fachmann weiss, dass je nach Auswahl des Polyamidmaterials keine stoffschlüssige Verbindung zwischen den Schichten vorliegt, da Unverträglichkeiten bei zum Beispiel Polyamid 6 mit Polyamid 12 auftreten. Die in DE 44 28 336 C1 beschriebenen Rohre lösen ebenfalls nicht das Problem, die Längenausdehnung im heissen Zustand zu reduzieren.

EP 0 656 388 A1 (Elf Atochem) beschreibt eine Zusammensetzung, die ein thermoplastisches Elastomer enthält, das wenigstens ein funktionalisiertes Elastomer und wenigstens ein Copolymer aus Polyether- oder amorphen Polyesterblöcken enthält. Weiterhin kann das Copolymer Polyamid-, Polyester- oder Polyurethanblöcke enthalten. Die Zusammensetzung kann auf eine Polyamid-Aussenschicht eines Rohrs aufgebracht werden.

FR 28 02 274 (Nobel Plastiques) beschreibt eine Kühlflüssigkeitsleitung für den Automobilsektor, gebildet aus einer Schicht aus thermoplastischem Elastomermaterial und einer thermoplastischen Schicht aus einem Blend aus Polyamid und Polypropylen. Zusätzlich ist eine äussere Schutzschicht aus schlagzähmodifiziertem Polyamid vorgesehen, die die Schicht aus dem Polyamid-Polypropylen-Blend umgibt. Die Schutzschicht besteht aus schlagzähmodifiziertem Polyamid.
Aus der WO 02/33303 sind Schläuche bekannt, welche ein zweiwandiges coextrudiertes gewelltes ("corrugated") Rohr aufweisen, dessen äussere Schutzschicht mit einer inneren Schicht verbunden ist. Die äussere Schicht kann aus einem Nylonmaterial hergestellt sein, also einem Polyamid. Die innere Schicht ist aus einem thermoplastischen Elastomer (TPE) hergestellt, wobei als einziges Beispiel für ein solches thermoplastisches Elastomer das unter der Marke Santoprene® vertriebene Produkt genannt wird. Das Dokument offenbart die Kombination einer Aussenschicht aus Nylon mit einer Innenschicht aus TPE. Gemäss geändertem Anspruch 28 der WO 02/33303 kann die innere Schicht aus einem thermoplastischen Polyester (TPE) bestehen. In Anbetracht dessen, dass E11 ausser an dieser Stelle der Ansprüche solche Polyester nicht offenbart und, dass "TPE" die gewöhnlich verwendete Abkürzung für "thermoplastic, elastomer" darstellt, wie in allen anderen Passagen des Dokuments WO 02/33303 gezeigt wird, scheint die Verwendung des Wortlauts "Polyester" im Anspruch 28 der WO02/33303 ein offensichtlicher Fehler zu sein.

Der vorliegenden Erfindung liegt daher die Aufgabe zugrunde, eine mehrschichtige Polymer-Schlauch- oder Rohrleitung, insbesondere mit einer speziellen Rohrgeometrie anzugeben, die einfach herstellbar ist, den Vorteil der geringeren Längenausdehnung und durch die verwendete Kombination der Aussen- und Innenschichtmaterialen auf einfache Weise auf angrenzende Formkörper aus Kunststoff oder Metall angeschweisst werden kann, so dass sie an den Verbindungsstellen dicht und druckfest ist. Weiterhin sollen zur Erhöhung der Festigkeit sowie zur Verminderung der Ausdehnung der Schlauch- oder Rohrleitung in Verarbeitungsrichtung die Aussenschichtmaterialien (Polyamide mit Additiven) modifiziert werden.

Diese Aufgabe wird durch die Schlauch- oder Rohrleitung gemäss Anspruch 1 gelöst. In den Unteransprüchen sind vorteilhafte Ausführungsformen der Erfindung enthalten.

Die Erfindung betrifft daher eine Polymer-Schlauch- oder Rohrleitung, welche eine äussere Schicht aus einer Formmasse aus einem härteren Polymer oder einer härteren Polymermischung und eine innere Schicht aus einem kautschukelastischen Polymer oder einer kautschukelastischen Polymermischung aufweist. Erfindungsgemäss wird somit eine Materialauswahl für die Schichten getroffen, welche EP 1 362 890 B1 im fertigen Verbund eine sogenannte "Hart-Weich-Kombination" ergibt. Die im Vergleich zur Aussenschicht weich eingestellte innere Schicht weist eine Härte der Ausgangspolymer-Zusammensetzungen oder Mischungen im Bereich von etwa 30 Shore A bis 60 Shore D, insbesondere von 30 Shore A bis 90 Shore A (jeweils nach ISO 868) auf.

Erfindungsgemäss besteht die äussere Schicht der Polymer-Schlauch- oder Rohrleitung aus einer Formmasse auf Basis von (Co)Polyamiden aus Polymerisaten aus aliphatischen C6 bis C 12-Laktamen oder ω-Aminocarbonsäuren mit 4 bis 18 Kohlenstoffatomen, wobei Polyamid 12 oder Blends, die überwiegend Polyamid 12 enthalten, besonderes bevorzugt ist. Alternativ können erfindungsgemäss als (Co)Polyamide Homo- oder Copolymere eingesetzt werden, die erhältlich sind aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind.

Die innere Schicht 4 der erfindungsgemässen Schlauch- oder Rohrleitung besteht aus einer Formmasse aus thermoplastischen, haftungsmodifizierten Elastomeren. Die thermoplastischen Elastomere (TPE) werden ausgewählt bestehend aus der Gruppe der TPE-Materialien des Typs der thermoplastischen Polystyrol-Elastomeren (TPE-S) oder modifizierten Styrol Olefin-Elastomeren oder Styrol-Olefin-Elastomer-Compounds (1), der thermoplastischen Chlor-Elastomeren (2), der thermoplastischen Polyamidelastomere (3), der thermoplastischen Polyurethan-Elastomere (4) besteht (vergleiche Patentanspruch 1).

Die TPE-Materialien des Typs aus thermoplastischen Polystyrolelastomeren (TPE-S) oder modifizierten Styrol-Olefin-Elastomeren oder Styrol-Olefinelastomer-Compounds (1), des Typs aus thermoplastischen Chlorelastomeren (2), des Typs aus thermoplastischen Polyamidelastomeren (3), und des Typs aus thermoplastischem Polyurethanelastomeren (4) können entweder selbst derart modifiziert sein, d.h. beispielsweise durch Pfropfen mit Maleinsäureanhydrid oder durch Reaktion mit Epoxiden, dass sie haftungsmodifiziert sind und somit den Zusatz eines Verträglichkeitsvermittlers überflüssig machen. Die TPE-Materialien (1) bis (4) können aber auch gegebenenfalls, d.h. je nach Typ des Elastomers, einen Zusatz eines Polyamids oder haftungsmodifizierten Polyamids enthalten. Weiterhin können die Elastomerzusammensetzungen des Typs (1) bis (4) Nicht-Polyamid-Verträglichkeitsvermittler enthalten. Dies sind beispielsweise
- Polyethylen, Polypropylen, die Ethylen/Propylen-Copolymeren, die Ethylen/Buten-Copolymeren, wobei alle diese Produkte mit Maleinsäureanhydrid oder Glycidylmethacrylat gepfropft sind,
- die Copoplymeren von Ethylen/Alkyl(meth)acrylat/Maleinsäureanhydrid, wobei das Maleinsäureanhydrid gepfropft oder copolymerisiert sein kann,
- die Copolymeren von Ethylen/Vinylacetat/Maleinsäureanhydrid, wobei das Maleinsäureanhydrid gepfropft oder co-polymerisiert sein kann,
- die beiden vorhergehenden Copolymeren, in denen Maleinsäureanhydrid durch Glycidylmethacrylat ersetzt ist,
- die Copolymeren von Ethylen/(Meth)acrylsäur und eventuell deren Salzen,
- Polyethylen, Polypropylen, die Ethylen/Propylen-Copolymeren, wobei diese Polymeren durch ein Produkt gepfropft sind, das eine reaktive Stelle für Amine bietet; diese gepfropften Copolymeren werden danach mit Polyamiden kondensiert oder die Oligomeren besitzen eine einzige Amino-Endgruppe.

Diese Produkte sind in FR 22 91 225 und EP 342 066 A1 beschrieben.

Die Menge an Verträglichkeitsvermittler ist diejenige Menge, die ausreicht, damit das jeweilige Elastomere sich in Form von Teilchen in der Matrix dispergieren kann. Sie kann bis zu 30 Gew.-% des Polyolefins betragen. Durch Verwendung der beschriebenen Verträglichkeitsvermittler kann somit die Haftung der erfindungsgemässen TPE's zu anderen Polymeren, Copolymeren oder Blends, wie sie beispielsweise in der Aussenschicht der hier beschriebenen Wellrohre vorhanden sind, verstärkt werden. Die Verträglichkeitsvermittler können, wie bereits oben beschrieben wurde, Anteile von anderen Polymeren, d.h. hier von Polyamid 6 oder 12, zu denen die Haftung angestrebt wird, sein.

Der Polyamid-Haftvermittler kann in einer besonders bevorzugten Ausführungsform aus einem funktionalisietem Polyamid bestehen, d.h. das Polyamid kann selbst mit funktionalisierten Gruppen versehen sein oder mit einem funktionalisierten Polyolefin umgesetzt worden sein, d.h. entweder mittels Schmelzevermischung oder in einem Dryblend umgesetzt worden sein. Diese Modifizierungsmassnahmen sind dem Fachmann zum Beispiel aus EP 753 027 B1 bekannt.

Unter den oben genannten thermoplastischen Elastomeren, auch TPE's genannt, sind thermoplastische Vulkanisate bevorzugt. Solche thermoplastischen Vulkanisate sind thermoplastische Elastomerblends auf Basis von Polyamiden oder Polyuretanen.

Besonderes bevorzugt handelt es sich bei den kautschukelastischen Materialien um solche aus der Gruppe, ausgewählt aus Styrol-Butadien-Copolymer-Kautschuke, Polychlorprenkautschuke und Gemischen davon.

Die Vernetzung der thermoplastischen Vulkanisate eifolgt während des Misch- und Kompoundierprozesses. Die thermoplastischen Vulkanisate sind verarbeitbar wie Thermoplaste, nehmen aber eine Zwischenstellung zwischen TPE's und herkömmlichen Vulkanisaten ein.

Als Beispiele für thermoplastische Styrol-Copolymer-Elastomer-Compounds seien die Handelsprodukte Thermolast® K (Kraiburg Shell), ein Polypropylen/SEBS, Thermoflex® (PTS), ein Polypropylen/SEPS genannt. Als weitere Materialgruppen für die TPE-Materialien sind auch thermoplastische Chlor--Elastomere anzusehen. Weiterhin sind erfindungsgemäss geeignet Polyamid-Elastomere. Hierbei handelt es sich um Polyetheresteramide, die sich beispielsweise von Polyamid 12 ableiten. Wie der Name sagt, sind die thermoplastischen Bausteine Polyamid-Sequenzen, die elastomeren Bausteine Polyethersequenzen. Diese Blöcke sind entweder über Ester- oder Amidgruppen miteinander verknüpft. Es handelt sich also um sogenannte segmentierte Blockcopolymere, die Eigenschaften von Elastomeren und Thermoplasten miteinander vereinen. Im Handel sind entsprechende Produkte erhältlich wie zum Beispiel Grilon® ELX (Ems), Grilamid® ELY (Ems), Pebax® (Atofina).

Weiterhin sind erfindungsgemäss geeignete Elastomere thermoplastische Polyuretanelastomere. Hier sind zum Beispiel als Handelsprodukt Desmopan® (Bayer) im Handel.

Als erfindungsgemäss einsetzbare TPE-Materialien sind weiterhin thermoplastische Polyurethan-Elastomere (TPE-U) mit einer Härte im Bereich von Shore A 65 bis Shore D 75 einsetzbar.

Erwähnenswert sind weiterhin thermoplastische Polystyrol-Elastomere (TPE-S), insbesondere Styrol-Olefin-Blockcopolymere. Diese thermoplastische Polystyrol-Elastomere können modifizierte Styrol-Olefin-Elastomer-Compounds sein, auf der Grundlage der zuvor erwähnten thermoplastischen Styrol-Olefin-Elastomere. Im allgemeinen erhalten diese Compounds 20 bis 85 Gew.-% mit Maleinsäureanhydrid funktionalisierten oder nicht funktionalisierten hochmolekularen Triblockcopolymeren, die aus steifen Styrol-Endblöcken und flexiblen Olefin-Mittelblöcken aufgebaut sind, und 15 bis 70 Gew.-% nicht olefinisches Thermoplastmaterial (derartige TPE-S sind in DE 198 45 235 beschrieben).

Erfindungsgemäss wird daher ein zweischichtig aufgebautes Rohr, insbesondere mit spiralförmiger Wellung bereitgestellt, das hinsichtlich der Materialauswahl eine "Hart-Weich-Kombination" ist, wobei die äussere Schicht 3 aus (Co)Polyamiden, insbesondere aus Polyamid 12 oder einer Polymermischung mit Polyamid 12 besteht, und die innere Schicht aus einem kautschukelastischen Polymer oder einer Polymermischung besteht. Die innere Schicht 4 weist im Vergleich zur äusseren härteren Schicht eine Shore-Härte im Bereich von 30 Shore Abis 90 Shore A auf.

Berstdruckfeste Materialien für die Aussenschicht sind bekanntermassen Polyamide. Erfindungsgemäss werden aber (Co)Polyamide ausgewählt, die erhältlich sind aus Polymerisaten aus aliphatischen C6 bis C12-Laktamen oder ω-Aminocarbonsäuren mit 4 bis 18 C-Atomen. In einer alternativen Ausführungsform werden Polyamide ausgewählt, die Homo- oder Copolymere sind, erhältlich aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind.

Ganz besonders bevorzugt wird PA 12 ausgewählt. Hierbei sind wiederum Polyamid 12-Materialien erfindungsgemäss besonders bevorzugt, die einen Überschuss an Aminoendgruppen gegenüber Caboxylendgruppen aufweisen. Die erfindungsgemäss eingesetzten Polyamid 12-Materialien mit einem Überschuss an Aminoendgruppen, d.h. mit einem Carboxy- zu Aminoendgruppenverhältnis von etwa 0,3, sind gegenüber Polyamid 12-Matrialien mit ausgeglichenem Endgruppenverhältnissen, d.h. einem Carboxy- zu Aminoendgruppenverhältnis von etwa 1,0 oder einem Überschuss an Säureendgruppen stabiler gegenüber hydrolytischem Abbau in heissem Wasser oder Kühlwasser, wie es in Kraftfahrzeugen verwendet wird. Weiterhin weisen PA 12-Materialien mit Amionoendgmppenüberschuss eine deutlich bessere und beständigere Haftung zu Polyolefinen mit funktionellen Seitengruppen auf. Diese Haftung wird auch bei dauerndem Angriff durch Hitze und Wasser nicht gelöst.

Die erfindungsgemäss eingesetzten Polyamid-Materialien können mit allen üblichen verarbeitungs- und verwendungsbedingten Additiven modifiziert sein. Dazu gehören auch andere Polymere, Weichmacher, Stabilisatoren oder Gleitmittel.

In einer besonders bevorzugten Ausführungsform der Erfindung enthält die Formmasse für die äussere Polyamidschicht nanoskalige Füllstoffe in einer Menge von 0,5 bis 50 Gew.-%, insbesondere in einer Menge von 1 bis 30Gew.-%, pro 100 Gewichtsteilen der Polymermatrix.

Die erfindungsgemäss eingesetzten nanoskaligen Füllstoffe sind ausgewählt aus der Gruppe der Oxide, Oxid-hydrate von Metallen oder Halbmetallen. Insbesondere sind die nanoskaligen Füllstoffe ausgewählt aus der Gruppe der Oxide und Oxidhydrate eines Elements, ausgewählt aus der Gruppe aus Bor, Aluminium, Gallium, Indium, Silizium, Germanium, Zinn, Titan, Zirkonium, Zink, Yttrium oder Eisen.

In einer besonderen Ausführungsform der Erfindung sind die nanoskaligen Füllstoffe entweder Siliziumdioxid oder Siliziumdioxid-Hydrate. In der Polyamidformmasse liegen die nanoskaligen Füllstoffe in einer Ausführungsform als ein gleichmässig dispergiertes, schichtförmiges Material vor. Vor dem Einarbeiten in die Matrix besitzen sie eine Schichtdicke von 0,7 bis 1,2 mm und einen Zwischenschichtabstand der Mineralschichten von bis zu 5 nm.

In Polyamid (PA)-Systemen, in denen die Füllstoff-Partikel Dimensionen im Nanometer-Bereich aufweisen, ergeben sich folgende Effekte: Der thermische Ausdehnungskoeffizient ist verglichen mit den ungefüllten Matrixpolymeren besonders in Verarbeitungsrichtung deutlich reduziert, die feinverteilten Partikeln reduzieren die Permeation von Gasen und Flüssigkeiten wie Wasser ohne dass wie in klassischen gefüllten Systemen (Composites) die Zähigkeit reduziert wird. Durch die molekulare Verstärkung ergibt sich auch bei höheren Temperaturen eine Verbesserung der mechanischen Eigenschaften.

Als Füller zur Herstellung von Nanocomposites eignen sich solche Stoffe, welche in jeder beliebigen Stufe der Polymerherstellung zugegeben werden können und dabei im Nanometerbereich fein verteilt werden können. Dies sind erfindungsgemäss bevorzugt Mineralien, die bereits eine Schichtstruktur aufweisen, wie Schichtsilikate, Doppelhydroxide, wie Hydrotalcit oder auch Graphit. Ebenso eignen sich Nanofüllstoffe auf Basis von Silikonen, Silica oder Silsesquioxanen (s.Abb.).

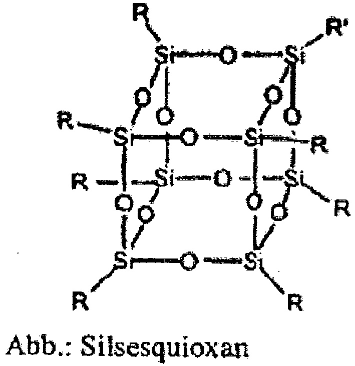

Unter Schichtsilikaten im erfindungsgemässen Sinne werden 1:1 sowie 2:1 Schichtsilikate verstanden. In diesen Systemen sind Schichten aus SiO₄-Tetraedern mit solchen aus M(O,OH)₆-Oktaedern in regelmässiger Weise miteinander verknüpft. M steht dabei für Metallionen wie Al, Mg, Fe. Bei den 1:1-Schichtsilikaten sind dabei jeweils eine Tetraeder- und eine Oktaederschicht miteinander verbunden. Beispiele hierfür sind Kaolin- und Serpentin-Minerale.

Bei den 2:1 Schichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen vorhanden, treten geladene Schichten auf. Diese negative Ladung wird durch den Einbau einwertiger Kationen wie Kalium, Natrium oder Lithium oder zweiwertiger wie Calcium in den Raum zwischen den Schichten ausgeglichen. Beispiele für 2:1-Schichtsilikate sind Talkum, Glimmer, Vermiculite, Illite sowie Smectite, wobei die Smectite zu denen auch der Montmorillonit gehört, sich wegen ihrer Schichtladung leicht mit Wasser quellen lassen. Weiterhin sind die Kationen leicht für Austauschprozesse zugänglich.

Die quellfähigen Schichtsilikate sind durch ihre Ionenautauschkapazität CEC (meq/g) und ihren Schichtabstand d_{L} charakterisiert. Typische Werte für CEC liegen bei 0,7 bis 0,8 meq/g. Der Schichtabstand bei einem trockenen unbehandeltem Montmorillonit liegt bei 1 nm und steigt durch Quellung mit Wasser oder Belegung mit organischen Verbindungen auf Werte bis zu 5 nm.

Beispiele für Kationen, die für Austauschreaktionen eingesetzt werden können, sind Ammoniumsalze von primären Aminen mit mindestens 6 Kohlenstoffatomen wie Hexanamin, Decanamin, Dodecanamin, hydrierte C18-Tallölamine oder auch quaternäre Ammoniumverbindungen sowie Ammoniumsalze von α-,ω-Aminosäuren mit mindestens 6 Kohlenstoffatomen. Weitere Stickstoff enthaltende Aktivierungsreagentien sind auf Triazin basierende Verbindungen. Derartige Verbindungen sind beispielsweise in EP-A-1 074 581 beschrieben, auf dieses Dokument wird daher besonders Bezug genommen.

Als Anionen eignen sich Chloride, Sulfate oder auch Phosphate. Neben Ammoniumsalzen können auch Sulfonium- oder Phosphoniumsalze wie beispielsweise Tetraphenyl- oder Tetrabutylphosphoniumhalogenide zur Verwendung kommen.

Da üblicherweise Polymere und Mineralien sehr unterschiedliche Oberflächenspannungen besitzen, können erfindungsgemäss zusätzlich zum Kationenaustausch auch Haftvermittler zur Behandlung der Minerale verwandt werden. Hierbei eignen sich Titanate oder auch Silane wie γ-Aminoproplytriethoxysilan.

Die erfindungsgemässe Schlauch- oder Rohrleitung ist zweischichtig und ist einfach auf den konventionellen Anlagen mittels Coextrusion oder mittels des sogenannten Conex-Verfahrens herstellbar, welches weiter unten beschrieben wird.

Die erfindungsgemässe Rohrleitung kann glatt ausgebildet sein, d.h. ohne eine gewellte Wandung. In einer bevorzugten Ausführungsform weist sie wenigstens in Teilbereichen eine gewellte Wandung auf, die in einer besonders bevorzugten Ausführungsform eine spiralförmig gewellte Wandung ist.

Die Erfindung betrifft daher in einer speziellen Ausführungsform zweischichtige Polymer-Schlauch-oder Rohrleitungen, die wenigstens in Teilbereichen eine spiralförmig gewellte Wandung aufweisen und die aus einer äusseren Schicht 3 aus einer Formmasse auf Basis von (Co-)Polyamiden aus der Gruppe aus aliphatischen C6 bisC12-Laktamen oder ω-Aminocarbonsäuren mit 4 bis 18 C-Atomen (a), wobei Polyamid 12 besonders bevorzugt ist, und einer inneren Schicht (b) bestehen, die kraft- bzw. formschlüssig direkt mit der äusseren Schicht verbunden ist, d.h. mit ihr haftet ohne zu delaminieren. In einer alternativen Ausführungsform kann die äussere Schicht 3 aus einer Formmasse auf Basis von Copolyamiden bestehen, die Homo- oder Copolymere sind, erhältlich aus der Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind.

Wesentlich ist für die oben genannte Schicht 4 der erfindungsgemässen Schlauch-oder Rohrleitung, dass sie kühlwasserbeständig ist, d.h. beständig gegenüber Heisswasser und Ethylenglycol bzw. Derivaten von Ethylenglycol sowie Korrosionsschutzzusätzen, bis mindestens 140°C.

Die Steifigkeit und die Festigkeit der zweischichtigen erfindungsgemässen Rohre kann durch Variation der Schichtdicken eingestellt werden, d.h. das Wandstärkenverhältnis der Schichten ist über die Länge der Leitung unterschiedlich. Je nach Einsatzart und Aufgabe können die Durchmesser der erfindungsgemässen Leitungen variieren. Beispielsweise können die Leitungen Durchmesser im Bereich von 5 mm bis 50 mm Innendurchmesser aufweisen. Die Schichtdicken der einzelnen Schichten der erfindungsgemässen Ausführungsformen können an die Anforderungen etwa im Bezug auf Barrierewirkungen, Berstdruckbeständigkeit oder Schlagzähigkeit angepasst werden und variieren zwischen0,5 mm und 3 mm.

In einer besonders Ausführungsform der Erfindung kann das Wandstärkenverhältnis der Schichten über die Länge der Leitung unterschiedlich sein.

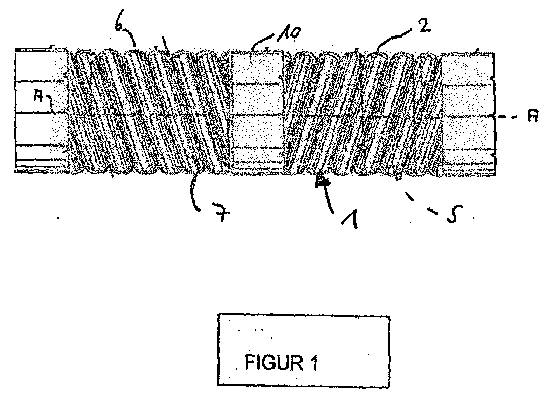

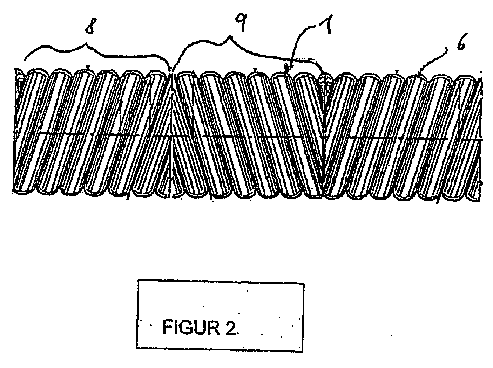

Das erfindungsgemässe Rohr kann durchgehend oder auch nur teilweise gewellte Bereiche aufweisen und durch glatte Bereiche 10 unterbrochen werden. Eine Ausführungsform des erfindungsgemässen Wellrohres weist eine spiralförmig gewellte Wandung auf, wie aus den beiliegenden Figuren 1 und 2 ersichtlich ist. Das erfindungsgemässe Wellrohr (1) enthält wenigstens einen gewellten Abschnitt 2, der wenigstens eine durchgehende Rippe oder Steg 6 aufweist, der sich entlang einer im wesentlichen helikalen Strecke S erstreckt. Der gewellte Abschnitt 2 enthält in seinem undeformierten Zustand eine Anzahl von identischen Wellen 7, wobei die Wellen 7 jeweils den gleichen Windungswinkel α aufweist.

In einer bevorzugten Ausführungsform weist das erfindungsgemässe Wellrohr ein Profil auf, welches durch eine Abfolge von alternierenden gegenseitig verbundenen äusseren Wellenbergen und Wellentälern definiert ist. Die Wellentäler laufen dabei nach unten konisch zu und sind im wesentlichen U-förmig und weisen einen im wesentlichen flachen Zwischenabschnitt auf, der sich längs der Achse A des Rohres erstreckt. Die Wellentäler weisen weiterhin zwei im wesentlichen flache laterale Abschnitte auf, die zusammenlaufen und auf den Zwischenabschnitt treffen. In einer alternativen Ausführungsform können die Wellentäler V-förmig sein und einen abgerundeten Scheitelpunkt aufweisen.

In einer besonderen erfindungsgemässen Ausführungsform können Bereiche mit sogenannten "Rechtsschrauben" 8 mit "Linksschrauben" 9 bündig aufeinander folgen. Durch diese spezielle Geometrie können zusätzlich noch die Längenausdehnungen im heissen Zustand weiter reduziert werden.

In einer Ausführungsform kann die erfindungsgemässe Wellrohrleitung als Kühlflüssigkeitsleitung in Kraftfahrzeugen verwendet werden.

Ein Vorteil der erfindungsgemässen Rohre, insbesondere Wellrohre ist, dass sie aufgrund der verwendeten speziellen Kombination der Aussen- und Innenschicht-Materialien einfach auf angrenzende Formkörper aus Kunststoff oder Metall angeschweisst werden können, so dass sie an den Verbindungsstellen dicht und druckfest sind. Durch die spiralförmig gewellte Wandung des erfindungsgemässen Wellrohres wird die Längenausdehnung in Folge Temperaturerhöhung, wie zum Beispiel im Motorraum eines Kraftfahrzeuges deutlich reduziert. Mit dem zweischichtigen Aufbau können die erfindungsgemässen Wellrohre mit der geringeren Längenausdehnung einfacher und wirtschaftlicher, d.h. kostengünstiger hergestellt werden. Zur weiteren Erhöhung der Festigkeit bzw. zur Verminderung der Ausdehnung der erfindungsgemässen Wellrohre können die Aussenschicht-Materialien mit nanoskaligen Füllstoffen modifiziert sein.

Die erfindungsgemässen Schlauch- oder Rohrleitungen lassen sich in einer oder mehreren Stufen durch Spritzgiessen, Coextrusion, Extrusions-Blasformen, Fräsen oder Ummantelungsverfahren herstellen. Weiterhin ist es möglich, die Schlauch- oder Rohrleitungen mit Hilfe des sogenannten Conex-Verfahrens herzustellen. Es handelt sich dabei um eine Coextrusion, wobei die einzelnen Schichten vergleichbar wie bei einem Wickelverfahren aufeinander aufgetragen werden. In WO 97/28949 wird dieses Verfahren beschrieben. Mit dem Conex-Verfahren erzielt man eine Ausrichtung der einzelnen Schichten, vergleichbar mit einem Folienreckeffekt.

Die erfindungsgemässen Wellrohre sind daher, wie erwähnt, insbesondere als Kühlflüssigkeitsleitungen in Kraftfahrzeugen geeignet. Darüber hinaus sind sie für die Verwendung als Be- und Entlüftungsleitung sowie als Benzinleitung oder Teilen von Benzinleitungen in Kraftfahrzeugen besonders geeignet.

## Patentansprüche

1. Mehrschicht-Polymer-Schlauch- oder Rohrleitung (1) mit reduzierter Längenänderung aus thermoplastischen, durch Coextrusion verarbeitbaren Polymeren, für den Einsatz als druckbeaufschlagte Fluidleitung, bestehend aus
(a) einer äusseren Schicht (3), aus einer Formmasse auf Basis von (Co)Polyamiden aus Polymerisaten aus aliphatischen C₆ bis C₁₂-Laktamen oder ω-Aminocarbonsäuren mit 4 bis 18 Kohlenstoffatomen, wobei Polyamid 12 besonders bevorzugt ist, oder aus der Gruppe aus Homo- oder Copolymeren, erhältlich durch Polykondensation von mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate geeignet sind und,
(b) einer inneren Schicht (4) die kraft- bzw. stoffschlüssig mit der äusseren Schicht (3) verbunden ist, aus einer Formmasse, die aus thermoplastischen, haftungsmodifizierten Elastomer-Zusammensetzungen (TPE) besteht, aus der Gruppe aus (1) bis (4):
(1) TPE-Materialien des Typs aus thermoplastischen Polystyrol-Elastomeren (TPE-S) oder modifizierten Styrol-Olefin-Elastomeren oder Styrol-Olefin-Elastomer-Compounds,
(2) TPE-Materialien des Typs aus thermoplastischen Chlor-Elastomeren,
(3) TPE-Materialien des Typs aus thermoplastischen PolyamidElastomeren,
(4) TPE-Materialien des Typs aus thermoplastischen PolyurethanElastomeren,
wobei den TPE-Materialien (1) bis (4) gegebenenfalls weiterhin Verträglichkeitsvermittler zugesetzt sein können.

2. Polymer-Schlauch- oder Rohrleitung gemäss Anspruch 1, **dadurch gekennzeichnet, dass** sie wenigstens in Teilbereichen eine gewellte Wandung (2), insbesondere eine spiralförmig gewellte Wandung (2), aufweist.

3. Mehrschicht-Polymer-Schlauch- oder Rohrleitung gemäss einem der Ansprüche 1 bis 2, **dadurch gekennzeichnet, dass** die äussere Schicht (3) aus Polyamid 12 aufgebaut ist, welches mit verarbeitungs- und verwendungsbedingten Additiven modifiziert sein kann.

4. Mehrschicht-Polymer-Schlauch- oder Rohrleitung gemäss einem oder mehreren der vorhergehenden Ansprüchen 1 bis 3, **dadurch gekennzeichnet, dass** die Polyamidformmasse für die äussere Schicht (3) nanoskalige Füllstoffe in einer Menge von 0,5 bis 50 Gew.-%, insbesondere in einer Menge von 1 bis 30 Gew.-%, pro 100 Gewichtsteilen der Polymermatrix, enthält.

5. Mehrschicht-Polymer-Schlauch- oder Rohrleitung gemäss irgendeinem der vorhergehenden Ansprüche 1 bis 4, **dadurch gekennzeichnet, dass** die für die Schicht (4) eingesetzte thermoplastische, haftungsmodifizierte Elastomer- Zusammensetzung (TPE) eine Härte im Bereich von 30 Shore A bis 60 Shore D, insbesondere von 30 Shore A bis 90 Shore A, gemessen nach ISO 868, aufweist.

6. Mehrschicht-Polymer-Schlauch- oder Rohrleitung gemäss einem der vorhergehenden Ansprüche 1 bis 5 **dadurch gekennzeichnet, dass** das Wandstärkenverhältnis der Schichten über die Länge der Leitung unterschiedlich ist.

7. Verfahren zur Herstellung der Mehrschicht-Polymer-Schlauch oder Rohrleitung gemäss einem der Ansprüche 1 bis 6 in einer oder mehreren Stufen durch Spritzgiessen, Coextrusion, Extrusions-Blasformen, Pressen oder Ummantelungsverfahren oder mittels des Conex-Verfahrens.

## Claims

1. Multi-layered polymeric hosepipe or pipeline (1) with a reduced longitudinal variation formed from thermoplastic polymers, processable by co-extrusion, for use as a fluid pipe which is acted upon by pressure, comprising
(a) an outer layer (3), formed from a moulding substance based on (co)polyamides formed from polymerisates of aliphatic C6 to C12 lactams or ω-amino-carboxylic acids having 4 to 18 carbon atoms, polyamide 12 being particularly preferred, or from the group of homopolymers or copolymers, obtainable by the polycondensation of at least one diamine from the group of aliphatic diamines having 4 to 12 C atoms, cycloaliphatic diamines having 7 to 22 C atoms and aromatic diamines having 6 to 22 C atoms in combination with at least one dicarboxylic acid from the group of aliphatic dicarboxylic acids having 4 to 12 C atoms, cycloaliphatic dicarboxylic acids having 8 to 24 C atoms and aromatic dicarboxylic acids having 8 to 20 C atoms, blends of the aforementioned polymerisates and/or polycondensates also being suitable, and,
(b) an inner layer (4), which is connected in a force-fitting or materially joined manner to the outer layer (3), formed from a moulding substance which consists of thermoplastic, adhesion-modified elastomeric compositions (TPE), from the group of (1) to (4):
(1) TPE materials of the type formed from thermoplastic polystyrene elastomers (TPE-S) or modified styrene olefin elastomers or styrene olefin elastomeric compounds,
(2) TPE materials of the type formed from thermoplastic chlorine elastomers,
(3) TPE materials of the type formed from thermoplastic polyamide elastomers,
(4) TPE materials of the type formed from thermoplastic polyurethane elastomers, compatibility agents possibly also being able to be added to the TPE materials (1) to (4).

2. Polymeric hosepipe or pipeline according to claim 1, **characterised in that** it has, at least in partial regions, an undulatory wall (2), more especially a helically undulatory wall (2).

3. Multi-layered polymeric hosepipe or pipeline according to one of claims 1 to 3, **characterised in that** the outer layer (3) is built-up from polyamide 12, which can be modified with additives depending on processing and use.

4. Multi-layered polymeric hosepipe or pipeline according to one or more of the preceding claims 1 to 4, **characterised in that** the polyamide moulding substance for the outer layer (3) contains nanoscale fillers in a quantity of between 0.5 and 50 % by wt., more especially in a quantity of between 1 and 30 % by wt., per 100 parts by weight of the polymeric matrix.

5. Multi-layered polymeric hosepipe or pipeline according to any of the preceding claims 1 to 4, **characterised in that** the thermoplastic, adhesion-modified elastomeric composition (TPE), used for the layer (4), has a hardness within the range of between 30 Shore A and 60 Shore D, more especially between 30 Shore A and 90 Shore A, measured in accordance with ISO 868.

6. Multi-layered polymeric hosepipe or pipeline according to one of the preceding claims 1 to 8, **characterised in that** the wall thickness ratio of the layers is different over the length of the pipe.

7. Method of producing the multi-layered polymeric hosepipe or pipeline according to one of claims 1 to 6 in one or more steps by injection-moulding, co-extrusion, extrusion blow-moulding, pressing or covering methods or by means of the Conex method.

## Revendications

1. Conduite de tubes rigides ou de tuyaux souples en polymère multicouches (1) à modification de longueur réduite, constituée de polymères thermoplastiques transformables par coextrusion, destinée à la mise en oeuvre en tant que conduite de fluides sous pression, constituée
(a) d'une couche externe (3), faite en une masse moulée à base de (co)polyamides issus de polymères de lactames en C6 à C12 aliphatiques ou d'acides ω-aminocarboxyliques ayant de 4 à 18 atomes de carbone, le polyamide 12 étant particulièrement préféré, ou issus du groupe des homo- ou copolymères, pouvant être obtenus par polycondensation d'au moins une diamine provenant du groupe des diamines aliphatiques ayant de 4 à 12 atomes de C, des diamines cycloaliphatiques ayant de 7 à 22 atomes de C et des diamines aromatiques ayant de 6 à 22 atomes de C en combinaison avec au moins un acide dicarboxylique issu du groupe des acides dicarboxyliques aliphatiques ayant de 4 à 12 atomes de C, des acides dicarboxyliques cycloaliphatiques ayant de 8 à 24 atomes de C et des acides dicarboxyliques aromatiques ayant de 8 à 20 atomes de C, où des mélanges des polymères et/ou polycondensats susmentionnés sont également appropriés et,
(b) d'une couche interne (4) qui est reliée par adhérence ou par substance à la couche externe (3), faite en une masse moulée, qui se compose de compositions d'élastomères thermoplastiques (TPE), modifiées sur le plan de l'adhérence, choisie dans le groupe des éléments (1) à (4) :
(1) des matières TPE du type des élastomères thermoplastiques de polystyrène (TPE-S) ou des élastomères modifiés de styrène - oléfine ou des composites élastomères de styrène - oléfine,
(2) des matières TPE du type des élastomères thermoplastiques de chlore,
(3) des matières TPE du type des élastomères thermoplastiques de polyamide,
(4) des matières TPE du type des élastomères thermoplastiques de polyuréthane, des agents conférant de la compatibilité pouvant être également ajoutés aux matières TPE (1) à (4).

2. Conduite de tubes rigides ou de tuyaux souples en polymère selon la revendication 1, **caractérisée en ce qu'**elle présente au moins dans des sections partielles une paroi ondulée (2), en particulier une paroi ondulée (2) en forme de spirale.

3. Conduite de tubes rigides ou de tuyaux souples en polymère multicouches selon l'une des revendications 1 à 2, **caractérisée en ce que** la couche externe (3) est constituée de polyamide 12, qui peut être modifié avec des additifs liés à la transformation et à l'utilisation.

4. Conduite de tubes rigides ou de tuyaux souples en polymère multicouches selon l'une ou plusieurs des revendications précédentes 1 à 3, **caractérisée en ce que** la masse moulée polyamide pour la couche externe (3) contient des charges nanoscalaires en une quantité de 0,5 à 50 % en poids, en particulier en une quantité allant de 1 à 30 % en poids pour 100 parties en poids de matrice polymère.

5. Conduite de tubes rigides ou de tuyaux souples en polymère multicouches selon l'une quelconque des revendications précédentes 1 à 4,**caractérisée en ce que** la composition élastomère thermoplastique (TPE) modifiée sur le plan de l'adhérence, mise en oeuvre pour les couches (4) et (5), présente une dureté dans la plage allant de 30 shore A à 60 shore D, en particulier de 30 Shore A à 90 Shore A, mesurée d'après la norme ISO 868.

6. Conduite de tubes rigides ou de tuyaux souples en polymère multicouches selon l'une des revendications précédentes 1 à 5,**caractérisée en ce que** le rapport des épaisseurs de parois des couches est différent sur la longueur de la conduite.

7. Procédé de fabrication de la conduite de tubes rigides ou dé tuyaux souples en polymère multicouches selon l'une des revendications 1 à 6, en une ou plusieurs étapes, par moulage par injection, coextrusion, moulage par soufflage et extrusion, compression ou procédé de gainage ou au moyen du procédé Conex.
